# EUROPEAN PATENT APPLICATION

(11) **EP 2 534 947 A1**
(43) Date of publication of application: **19.12.2012**
(21) Application number: 11742174.3
(22) Date of filing: 04.02.2011
(51) Int. Cl.: A01K 83/00

(54) **FISHING HOOK**

(30) Priority: 09.02.2010 JP 2010026106
(71) Applicant: Shintowa Co., Ltd, Hamamatsu-shi, Shizuoka 433-8117 (JP)
(72) Inventor: TSUTSUMI, Teruhiro, Hamamatsu-shi Shizuoka 433-8117 (JP)
(74) Representative: Cohausz & Florack
(86) International application number: PCT/JP2011/052416
(87) International publication number: WO 2011/099430

(57) **Abstract**

[Object] Provided is a fishing hook in which a light-emitting element is provided on a base end side of a hook body formed by bending a wire, whereby natural bait or various types of artificial bait can be used, a fish-attracting effect can be imparted to the fishing hook itself, and the light-emitting element can be provided with a function of suppressing separation of the bait.

[Solution] On the base end side of the hook body provided continuously to a substantially C-shaped hook portion, the light-emitting element in which a light-emitting sheet capable of emitting light from a phosphorescent material and/or luminescent material and a multilayer polymer film having an interference phenomenon of light are laminated is attached. Moreover, the light-emitting sheet and the multilayer polymer film in the light-emitting element are wound upon the base end side of the hook body in a laminated state, and a fishing line or affixing line is wound and affixed upon the front surface side of the light-emitting element so as to form an uneven surface.

## Description

### Technical Field

The present invention relates to a fishing hook to be used for fishing in a river and fishing in the sea and particularly to a fishing hook having a light-emitting element on the base end side of a hook body and capable of increasing a fish-attracting effect.

### Background Art

A fishing hook using natural bait has been disclosed in Patent Document 1, for example. This fishing hook includes a hook portion having a point at the tip end and a hook body provided continuously to this hook portion and having a line attachment portion on the base end side, and a large number of holes are formed in the side face of the hook body. A fishing hook to be used with a lure as artificial bait has been disclosed in Patent Document 2, for example. In this fishing hook, a ring-shaped attachment portion of the fishing hook having a hook portion and a hook body is coupled to an eye of the lure body to which a light-emitting element is detachably attached in a hollow portion inside.

### Citation List

### Patent Document

Patent Document 1: Japanese Unexamined Patent Application Publication No. 2007-53997
Patent Document 2: Japanese Unexamined Patent Application Publication No. 2005-278583

### Summary of Invention

### Technical Problem

However, in the fishing hook described in Patent Document 1, the large number of holes provided in the hook body makes it difficult for natural bait such as angleworms, lugworms and the like to separate from the fishing hook, but the holes need to be made in the hook body, and the work is extremely cumbersome and particularly application to a small fishing hook is difficult. Further, the fishing hook is formed merely by bending a high-carbon steel wire or high-carbon stainless steel wire, and a fish-attracting effect cannot be imparted to the fishing hook itself. Moreover, in the fishing hook described in Patent Document 2, the fish-attracting effect can be imparted to some degree to the light-emitting element of the lure body, but since the fishing hook is formed only by bending a wire similarly to the fishing hook in Patent Document 1, it is difficult to impart the fish-attracting effect to the fishing hook itself.

The present invention was made in view of the above-described circumstances and an object thereof is to provide a fishing hook that can be used both for natural bait and various types of artificial bait and can impart a fish-attracting effect to the fishing hook itself by providing a light-emitting element on the base end side of the hook body formed by bending a wire. Another object of the present invention is to provide a fishing hook in which the light-emitting element can have a function of suppressing separation of bait.

### Solution to Problem

In order to achieve the above-described objects, an invention described in claim 1 in the present invention is a fishing hook including a hook portion having a sharp point at the tip end and a substantially C-shaped bent portion, and a hook body provided continuously to the hook portion and having an attachment portion to which a fishing line or artificial bait can be attached on the base end side, in which on the base end side of the hook body, a light-emitting element in which a light-emitting sheet capable of emitting light from a phosphorescent material and/or luminescent material and a multilayer polymer film having an interference phenomenon of light are laminated is attached.

An invention described in claim 2 is characterized in that the light-emitting sheet and the multilayer polymer film in the light-emitting element are wound upon the base end side of the hook body in a laminated state, and the fishing line or an affixing line is wound and affixed upon the front surface side of the light-emitting element so as to form an uneven surface. Moreover, an invention described in claim 3 is characterized in that the attachment portion of the hook body is formed to have a ring shape, and a connecting line capable of being connected to an eye of the artificial bait is attached to the attachment portion.

Moreover, an invention described in claim 4 is characterized in that the light-emitting sheet is formed of a sheet having high visibility from one face side and excellent transparency from the other face side. Moreover, an invention described in claim 5 is characterized in that a filamentous body made of a plurality of threads is attached to the outside of the light-emitting element. Advantageous Effects of Invention

According to the invention described in claim 1 in the present invention, since the light-emitting element in which the light-emitting sheet capable of emitting light from a phosphorescent material or luminescent material and the multilayer polymer film having an interference phenomenon of light are laminated is attached on the base end side of the hook body formed by bending a wire, the light-emitting element brilliantly flashes during the daytime while it emits light and shines at night, and natural bait, artificial bait imitating the natural bait or artificial bait such as a lure can be used, and a sufficient fish-attracting effect can be imparted to the fishing hook itself.

Moreover, according to the invention described in claim 2, in addition to the effect of the invention described in claim 1, since the light-emitting sheet and the multilayer polymer film are wound upon the base end side of the hook body in a laminated state, and the fishing line (leader) or affixing line such as an affixing gut is wound and affixed upon the front surface side thereof, separation of the bait such as natural bait or artificial bait imitating the natural bait from the hook body can be suppressed on the uneven surface caused by the fishing line or affixing line wound and affixed upon the front surface side of the light-emitting element.

Moreover, according to the invention described in claim 3, in addition to the effect of the invention described in claim 1, since the connecting line capable of being connected to an eye of the artificial bait is attached to the attachment portion formed to have a ring shape on the hook body, the fishing hook can be used as a fishing hook for artificial bait such as a lure, and by setting the length of the connecting line to a desirable length, a range of applications of the lure can be expanded. For example, the fish-attracting effect can be increased by the light-emitting element of the fishing hook while the artificial bait is used as a weight.

Moreover, according to the invention described in claim 4, in addition to the effects of the invention described in claims 1 to 3, since the light-emitting sheet is formed of a sheet having high visibility from one face side and excellent transparency from the other face side, the light-emitting sheet can store sufficient light and emit light reliably to the multilayer polymer film, and the fish-attracting effect can be further increased by the interference phenomenon of light by the polymer film.

Moreover, according to the invention described in claim 5, in addition to the effects of the invention described in claims 1 to 4, since a filamentous body made of a plurality of threads is attached to the outside of the light-emitting element, the fish-attracting effect obtained by the light-emitting element can be further increased by forming the filamentous body with a luminescent material, and by forming the filamentous body with feather, versatility of the fishing hook can be increased. For example, the fishing hook can be used as an artificial fly.

### Brief Description of Drawings

[Fig. 1] Fig. 1 is a front view illustrating a first embodiment of a fishing hook according to the present invention.
[Fig. 2] Fig. 2 is a side view of a line attachment portion of a hook body of the first embodiment.
[Fig. 3] Fig. 3 is an A-A line sectional view of Fig. 1 of the first embodiment.
[Fig. 4] Fig. 4 is a longitudinal sectional view of a light-emitting element of the first embodiment.
[Fig. 5] Fig. 5 is a process chart illustrating a method of manufacturing the fishing hook of the first embodiment.
[Fig. 6] Fig. 6 is an explanatory diagram of a use state of the first embodiment.
[Fig. 7] Fig. 7 includes a side view and a front view illustrating a variation of the line attachment portion of the first embodiment.
[Fig. 8] Fig. 8 is a half-sectional view of a main part illustrating a variation of the hook body of the first embodiment.
[Fig. 9] Fig. 9 is a front view similar to Fig. 1 illustrating a variation of the light-emitting element.
[Fig. 10] Fig. 10 is a front view illustrating a second embodiment of a fishing hook according to the present invention.
[Fig. 11] Fig. 11 is a B-B line sectional view of Fig. 10 of the second embodiment.
[Fig. 12] Fig. 12 is a longitudinal sectional view of the light-emitting element of the second embodiment.
[Fig. 13] Fig. 13 is an explanatory diagram of a use state of the second embodiment.
[Fig. 14] Fig. 14 includes front views illustrating a variation of the fishing hook of the second embodiment. Description of Embodiments

Embodiments of the present invention will be described below in detail with reference to the attached drawings.

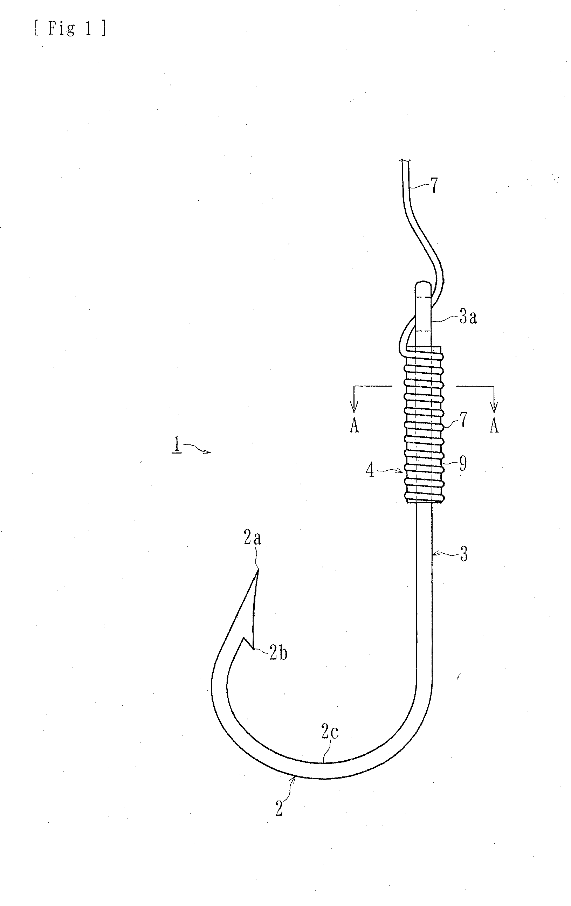

Figs. 1 to 9 illustrate a first embodiment of a fishing hook according to the present invention. This fishing hook is used for fishing that uses natural bait or artificial bait imitating the natural bait. As illustrated in Fig. 1, a fishing hook 1 has a hook portion 2 formed by bending a wire such as a high-carbon steel wire, a high-carbon stainless steel wire or the like into a substantially C-shape and a hook body 3 provided continuously to this hook portion 2.

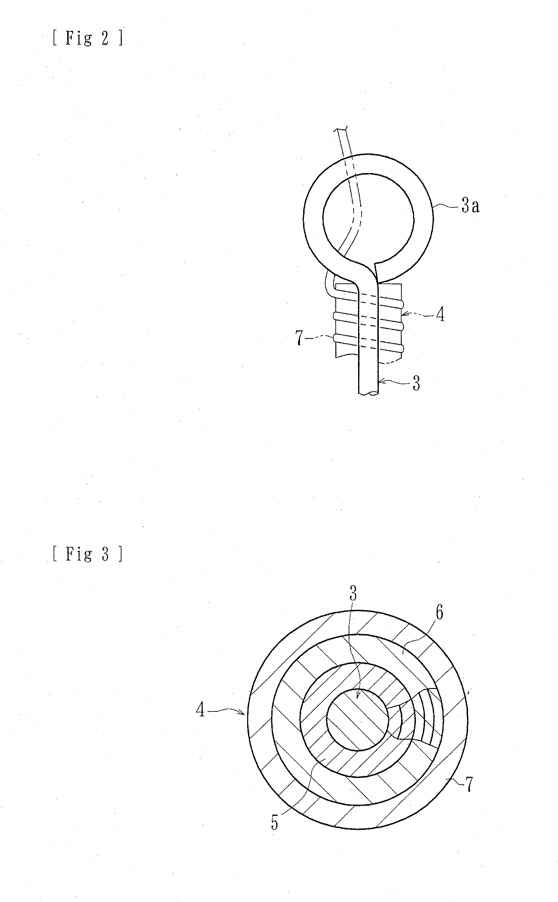

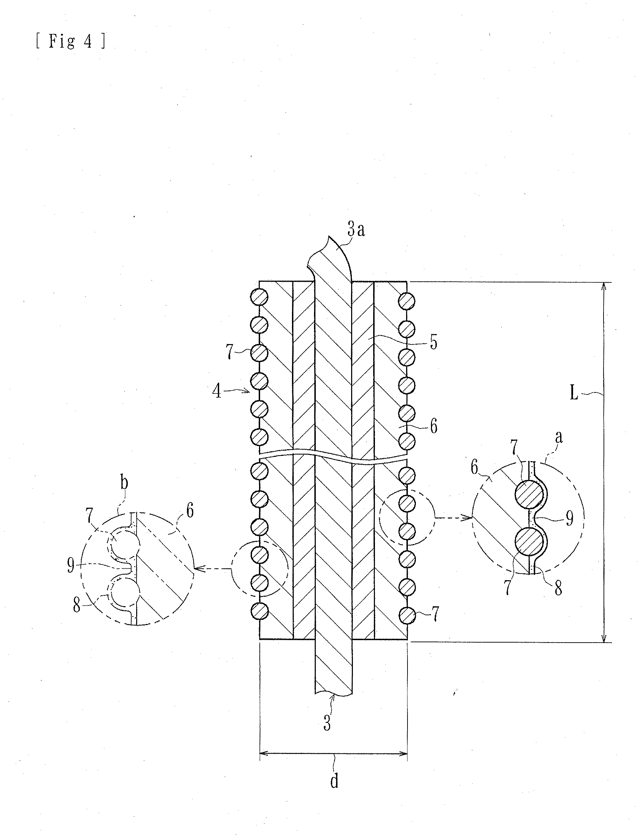

The hook portion 2 is formed of a point 2a provided at a hook tip end thereof, a barb 2b provided on the base end side of the point 2a, and a substantially C-shaped bent portion 2c. Moreover, on the base end side of the hook body 3, a ring-shaped line attachment portion 3a is formed as illustrated in Fig. 2. On the line attachment portion 3a side which is the base end side of the hook body 3, a light-emitting element 4 having a certain length L and a certain outer diameter d (See Fig. 4) is attached.

The light-emitting element 4 has a light-emitting sheet 5 (including a film, a tape and the like) wound around an outer peripheral surface of the hook body 3 a certain number of times (one or several turns) and a multilayer polymer film 6 (including a sheet, a tape and the like) wound around the surface side of this light-emitting sheet 5 a certain number of times (one or several turns) as illustrated in Figs. 3 and 4. An end portion of a fishing line 7 as a leader is wound spirally around the outer peripheral surface of the multilayer polymer film 6, and those are affixed by a transparent adhesive 8 (See Fig. 4). Here, the fishing line 7 is made to penetrate through the line attachment portion 3a of the hook body 3 or is wounded around and affixed thereto at the base end side (upper side in Fig. 1) of the fishing line 7 and extends upward by a certain length. By the winding of the fishing line 7, an uneven surface 9 (see Figs. 1 and 4) is formed on the outer peripheral surface of the light-emitting element 4.

The light-emitting sheet 5 is formed of a sheet having a certain color tone with high visibility from one surface side (the multilayer polymer film 6 side) and excellent transparency from the other surface side (the hook body 3 side) by applying (printing) a light-emitting paint (luminescent material) containing a phosphorescent material and/or a fluorescent material on a transparent resin sheet having flexibility. Moreover, the multilayer polymer film 6 is formed of a multilayer polymer film (product name: Aurora film, or Marble, for example) having a molecular arrangement of optically separating, interfering with, and reflecting spectrum of light and has an interference phenomenon of light in a certain color tone. Here, the light-emitting sheet 5 and the multilayer polymer film 6 in color tones with which certain results of catching fish were obtained through experiments or the like are used in accordance with the type of target fish. Further, as the fishing line 7, a transparent (or colored translucent) gut or the like is used, and as the adhesive 8, a transparent instant adhesive, transparent paint or the like is used.

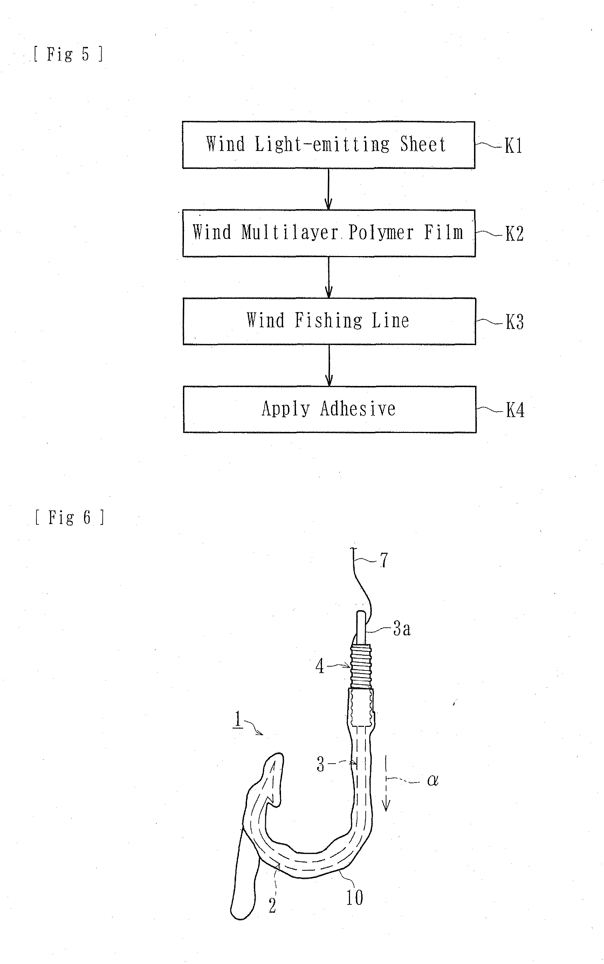

The fishing hook 1 configured as described above is manufactured as illustrated in Fig. 5. That is, a commercially available fishing hook is prepared, and the light-emitting sheet 5 and the multilayer polymer film 6 which are cut to have substantially the same width and the fishing line 7 having a certain length are prepared. Then, the light-emitting sheet 5 is wound (K1) on the base end side of the hook body 3 of the fishing hook. At this time, the light-emitting sheet 5 is in a state attached to a base material sheet (not shown) by an adhesive applied to an adhesion surface thereof, and the light-emitting sheet 5 is wound on the outer peripheral surface of the hook body 3 a certain number of times by using the adhesive while peeling off the base material sheet.

When the light-emitting sheet 5 has been wound, the multilayer polymer film 6 is wound on the outer peripheral surface side of the light-emitting sheet 5 (K2). The winding of the multilayer polymer film 6 can be also performed a certain number of times by using an adhesive applied to the adhesion surface similarly to the light-emitting sheet 5. Then, a transparent fishing line 7, for example, is wound (K3) on the outer peripheral surface of this multilayer polymer film 6. The winding of the fishing line 7 makes the fishing line 7 bite into the outer peripheral surface of the multilayer polymer film 6 as illustrated in an enlarged manner by a two-dot chain line a in Fig. 4 by winding the fishing line with a certain tensile force, and the multilayer polymer film 6 and the light-emitting sheet 5 are pressed to the outer peripheral surface of the hook body 3 with a certain pressure.

The biting amount of the fishing line 7 at this time is set as appropriate in accordance with hardness or other properties of the material of the multilayer polymer film 6, and as illustrated in an enlarged manner by a two-dot chain line b in Fig. 4. The biting amount may be set to the amount indicating an extremely slightly bitten state and a winding pitch of the fishing line 7 may be set as appropriate in accordance with the length L or an outer diameter d of the light-emitting element 4, the shape of the fishing hook 1, and the like.

After the fishing line 7 has been wound, the transparent adhesive 8 is applied (K4) to the front surface side of the fishing line 7, and the fishing line 7 is affixed to the surface of the light-emitting element 4 (multilayer polymer film 6). As a result, the uneven surface 9 is formed by the fishing line 7 on the surface of the light-emitting element 4, and separation of bait 10 from the hook body 3 is suppressed on this uneven surface 9 as will be later described.

Next, an example of how to use the fishing hook 1 configured as described above will be described by referring to Fig. 6. The fishing hook 1 is a fishing hook that is used for fishing using bait as described above, and as illustrated in Fig. 6, the bait 10 such as natural bait of angleworms, lugworms, sandworms and the like or artificial bait formed of a resin by imitating the natural bait is attached to the hook portion 2 and the hook body 3 of the fishing hook 1. At this time, the bait 10 is attached so as to pass through the bent portion 2c and the hook body 3 from the point 2a and attached so that the end portion of the bait 10 covers the lower half, for example, of the light-emitting element 4.

As a result, the end portion of the bait 10 which becomes a tip end in a direction of being stuck with (fitting to the fishing hook 1) is hooked by the uneven surface 9 with the fishing line 7 on the surface of the light-emitting element 4, and the bait 10 will not easily separate from the fishing hook 1 unlike fishing hooks of the related art. That is, if the fishing hook is merely formed by bending a wire as in examples of the related art, the end portion of the bait 10 can easily slip down along the smooth outer peripheral surface of the hook body as indicated by an arrow □, and the bait 10 is prevented from separating solely by the barb at the tip end of the hook portion.

On the other hand, in the case of the fishing hook 1, since the end portion of the bait 10 is hooked by the uneven surface 9 of the light-emitting element 4, the end portion of the bait 10 will not easily slip down along the hook body 3 in the arrow □ direction, and since the tip end of the bait 10 is hooked by the barb 2b, the separation of the bait 10 from the fishing hook 1 is suppressed. As a result, a portion of the fishing hook 1 itself exposed by the separation of the bait 10 can be made as small as possible, the fish-attracting effect can be imparted to the light-emitting element 4, and a good result of catching fish can be achieved.

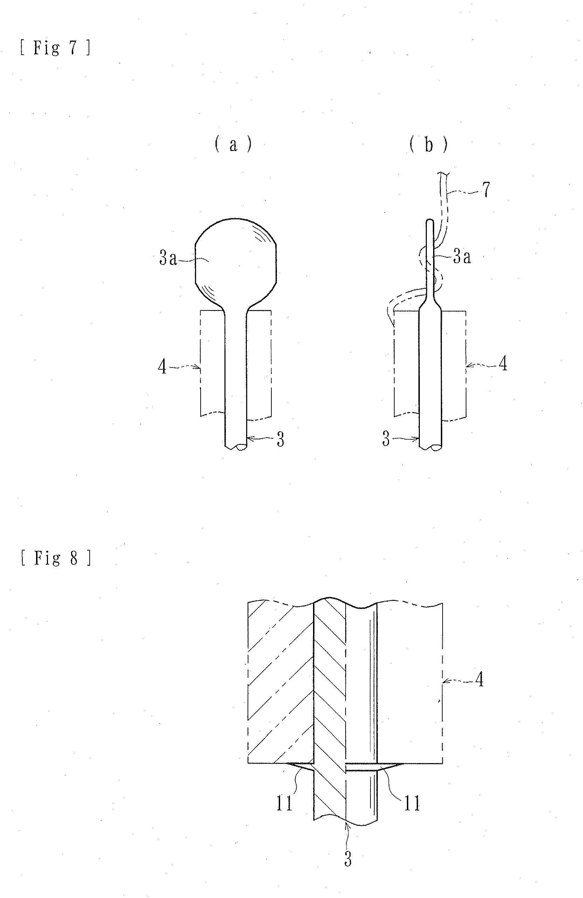

In the above-described fishing hook 1, the example in which the line attachment portion 3a of the hook body 3 has a ring shape is described, but as illustrated in (a) and (b) of Fig. 7, for example, the line attachment portion 3a may have a plate shape formed by flattening a wire. In this case, it is only necessary to wind and affix the tip end side of the fishing line 7, wound on the outer peripheral surface of the multilayer polymer film 6 of the light-emitting element 4, to the line attachment portion 3a by an adhesive. Moreover, as illustrated in Fig. 8, a line positioning portion 11 may be integrally provided by, for example, cutting and raising the hook body 3 at a certain position on the line attachment portion 3a side, and the light-emitting element 4 may be attached onto the positioning portion 11. The positioning portion 11 may be formed along the whole circumference of the outer peripheral surface of the hook body 3 or formed at a part in the circumferential direction such as at opposite positions or the like.

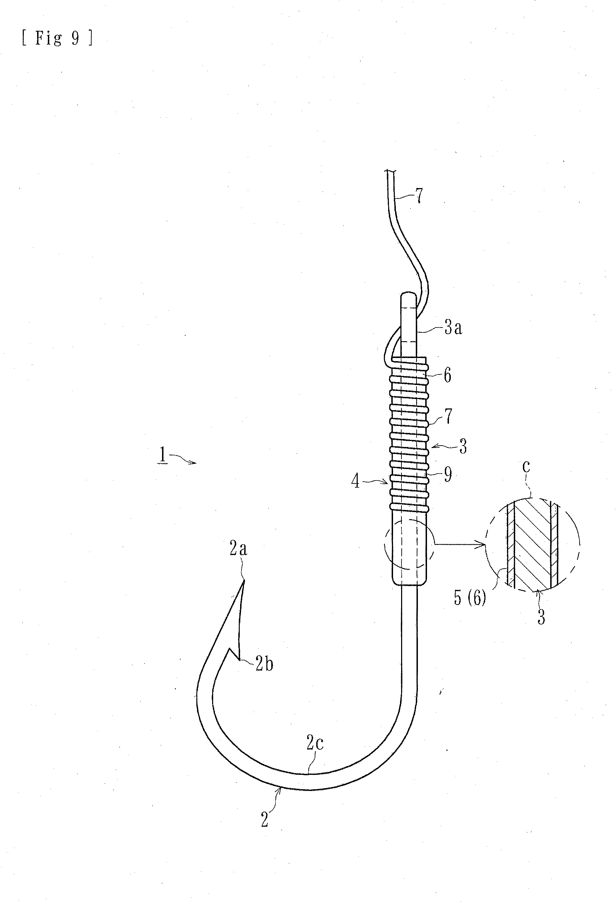

Moreover, in the fishing hook 1 in the above explanation, the lengths of the light-emitting sheet 5 and the multilayer polymer film 6 of the light-emitting element 4 are set to be equal to each other and the fishing line 7 is wound on the outer peripheral surface of substantially the whole region in the longitudinal direction of the light-emitting element 4. However, as illustrated in Fig. 9, for example, the lower part of the light-emitting element 4 may remain exposed without winding the fishing line 7 on the outer peripheral surface thereof. In this case, as indicated by a two-dot chain line c in Fig. 9, it is needless to say that the exposed portion may only have the light-emitting sheet 5 or the multilayer polymer film 6. Moreover, in the above explanation, the end portion of the fishing line 7 (leader) is used for the affixing of the light-emitting element 4 (multilayer polymer film 6 and the like) to the hook body 3, but if the fishing line 7 is, for example, thin, it is possible to use, instead of using the fishing line 7, an affixing gut as a transparent or translucent exclusive affixing line, not shown. In this case, the end portion of the fishing line 7 is wound and affixed to the line attachment portion 3a of the hook body 3.

As described above, according to the fishing hook 1, since the light-emitting element 4 in which the light-emitting sheet 5 capable of emitting light from a phosphorescent material or luminescent material and the multilayer polymer film 6 having an interference phenomenon of light are laminated is attached to the line attachment portion 3a side of the hook body 3 formed by bending a wire, the light-emitting element 4 brilliantly flashes during the daytime while it emits light and shines at night, and a sufficient fish-attracting effect can be imparted to the fishing hook 1 itself.

Particularly, since the light-emitting sheet 5 is formed of a sheet having high visibility from one face side and excellent transparency from the other face side, a sufficient phosphorescent action can be obtained in the light-emitting sheet 5, and light can be emitted (radiated) reliably to the multilayer polymer film 6, and the fish-attracting effect can be further increased by the interference phenomenon of light by the polymer film 6. That is, the light-emitting element brilliantly flashes by the interference phenomenon of light of the multilayer polymer film by sunlight during the daytime, while the multilayer polymer film glitters by light accumulated in the light-emitting sheet and shines, which increases the fish-attracting effect.

Moreover, since the light-emitting sheet 5 and the multilayer polymer film 6 are wound in the laminated state on the line attachment portion 3a side of the hook body 3 and the fishing line 7 is wound and attached to the front surface side, the bait 10 such as natural bait, artificial bait imitating the natural bait or the like will not easily slip down the smooth outer peripheral surface of the hook body 3 made of a wire due to the uneven surface 9 on the surface of the fishing line 7 wound and affixed to the front surface side of the light-emitting element 4, and together with the barb 2b of the hook portion 2, separation of the bait 10 from the fishing hook 1 can be suppressed as much as possible, and a sufficient result of catching fish can be expected. At this time, if the fishing line 7 is thin, a dedicated relatively thick affixing gut may be used to affix the light-emitting element 4 to the hook body 3, so that the affixed state of the light-emitting element 4 is stabilized, the reliable uneven surface 9 can be formed on the surface of the light-emitting element 4, and the separation of the bait 10 can be suppressed more reliably.

Moreover, since the fishing hook 1 is formed by attaching the light-emitting element 4 having the certain length L to the line attachment portion 3a side of the hook body 3, any natural bait or bait 10 such as artificial bait imitating the natural bait can be attached, similarly to fishing hooks of the related art, to the fishing hook 1 while the separation thereof is suppressed, the fishing hook can be used for various types of fishing, and the fishing hook 1 with excellent availability can be provided. Moreover, by providing the positioning portion 11 that can position the light-emitting element 4 on the hook body 3, displacement of the light-emitting element 4 can be reliably prevented, and the light-emitting element 4 can be held at a certain position on the hook body 3 in a stable state all the time. Furthermore, by exposing the light-emitting sheet 5 or the multilayer polymer film 6 of the lower part of the light-emitting element 4, the fish-attracting effect can be further increased by the interference phenomenon or the like of light at the exposed portion.

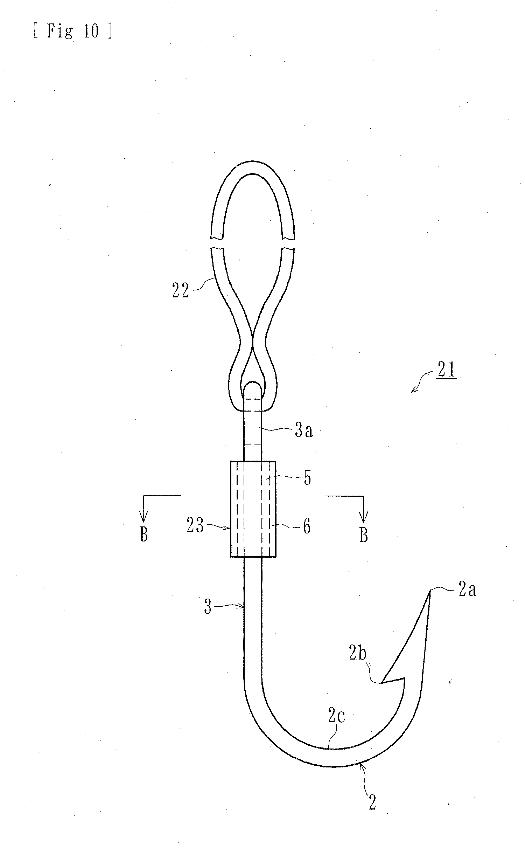

Figs. 10 to 14 show a second embodiment of a fishing hook according to the present invention. The same portions as those in the above-described embodiment are given the same reference numerals below for explanation. A fishing hook 21 of this embodiment is used for a lure as artificial bait, and the ring-shaped line attachment portion 3a is formed on the base end side of the hook body 3. To this line attachment portion 3a, an endless connecting line 22 made of a resin thread or the like to which a fluorescent paint is applied is attached, and a light-emitting element 23 is attached to the line attachment portion 3a side of the hook body 3.

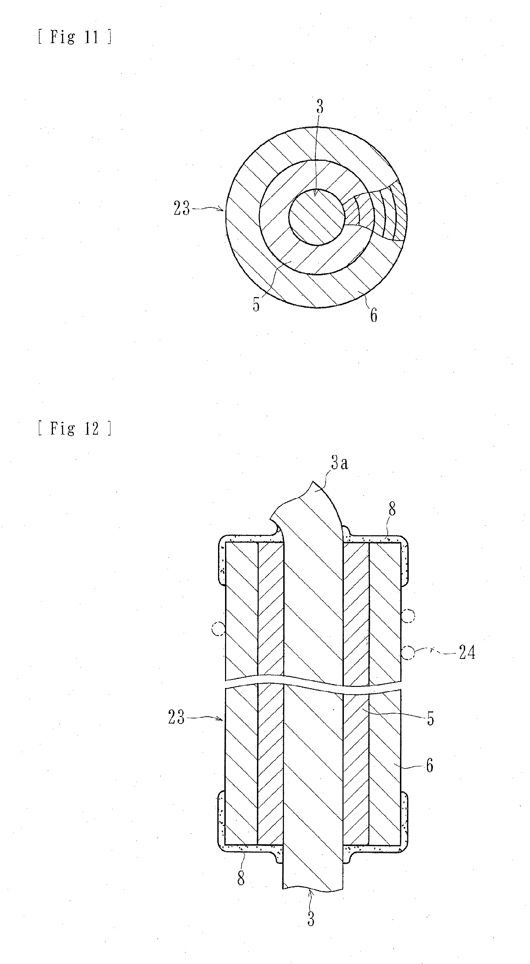

The light-emitting element 23 at this time has, as illustrated in Figs. 11 and 12, the light-emitting sheet 5 wound several times on the outer peripheral surface of the hook body 3 and the multilayer polymer film 6 wound several times on the outer peripheral surface of the light-emitting sheet 5, and by applying the transparent or colored adhesive 8 to upper and lower parts of the light-emitting element 23, for example, the light-emitting element 23 is attached to the hook body 3. In this case, as indicated by a two-dot chain line, the outer peripheral surface of the multilayer polymer film 6 may be wrapped with an affixing line 24 similar to the above-described affixing gut made of a transparent or colored translucent fishing line or the like functioning only for affixing, and this affixing line 24 may be affixed by the adhesive 8, so that the light-emitting element 23 is attached to the hook body 3.

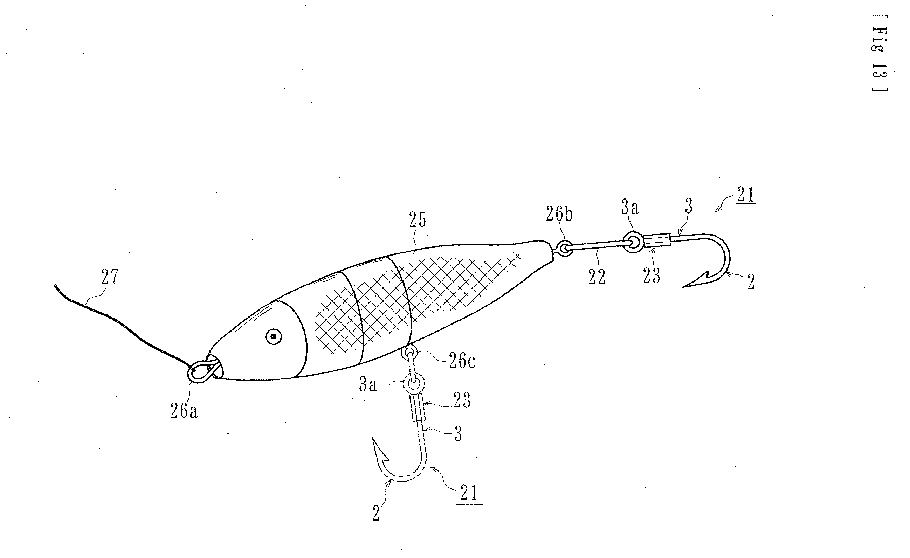

The fishing hook 21 is used as illustrated in Fig. 13. That is, the connecting line 22 of the fishing hook 21 is connected to an eye 26b provided at a tail portion which is an end portion of a lure body 25 formed having the shape of small fish, and a fishing line 27 of a fishing rod is connected to an eye 26a at a head part of the lure body 25. As a result, lure fishing is performed in a state where the fishing hook 21 is located on the rear of the lure body 25, and at this time, the lure body 25 glitters by the fluorescent paint or the like provided with the lure body 25, and the light-emitting element 23 provided on the fishing hook 21 also glitters. In the case of this embodiment, the connecting line 22 may be set longer to 0.5 to 3 m, for example, so that the lure body 25 and the fishing hook 21 are separated from each other, and lure fishing can be performed while the lure body 23 is used as a weight.

In this fishing hook 21, the working effect similar to that of the fishing hook 1 in the above-described embodiment such as increase of the fish-attracting effect by the light-emitting element 23 provided on the fishing hook 21 or the like can be obtained. Moreover, by setting the connecting line 22 longer as described above, the lure body 25 can be used as a weight, and the fish-attracting effect can be further increased both by the lure body 25 and the light-emitting element 23 of the fishing hook 21, and a range of applications of the fishing hook 21 can be expanded.

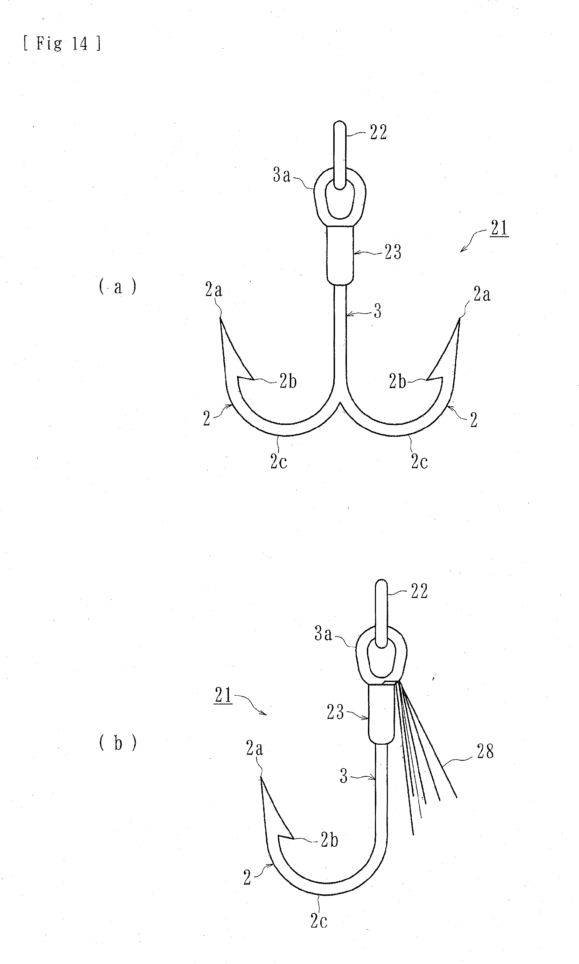

In the case of this embodiment, an attachment position of the fishing hook 21 to the lure body 25 is not limited to the tail portion but as illustrated in a two-dot chain line in Fig. 13, it is needless to say that the fishing hook 21 can be attached to an eye 26c provided on the belly portion of the lure body 25. Moreover, in the case of lure fishing, the form of the fishing hook 21 is not limited to a single hook but a multiple hook (two-piece hook in the figure) may be used as illustrated in (a) of Fig. 14. Moreover, as illustrated in (b) of Fig. 14, an end portion of a hook-shaped filamentous body 28 made of a plurality of resin threads in various colors of emitting light may be attached to the end portion of the light-emitting element 23 attached to the hook body 3 so as to further increase the fish-attracting effect. The filamentous body 28 can be also applied to the fishing hook 1 in the above-described first embodiment, and in that case, by using a filamentous body 28 made of a plurality of feather-like threads, the fishing hook 1 can be used as a fishing fly.

In each of the above-described embodiments, the fishing hook having the barb 2b provided at the hook portion 2 is described, but the fishing hook according to the present invention is not limited to that configuration but can be applied to the fishing hook not having the barb 2b. Moreover, in each of the above-described embodiments, the widths of the light-emitting sheet 5 having the length L of the light-emitting element and the multilayer polymer film 6 are set to be equal to each other so that the interference phenomenon of light becomes substantially the same in the longitudinal direction of the light-emitting elements 4 and 23. However, by winding together a plurality of light-emitting sheets 5 or multilayer polymer films 6 in different color tones or the like that can easily obtain a good result of catching fish in accordance with the type of fish, for example, different light-emitting states or different light interference phenomena can be generated in the longitudinal direction of the light-emitting elements 4 and 23.

Moreover, the light-emitting sheet 5 and the multilayer polymer film 6 wound with a plurality of layers on the hook body 3 are not limited to winding of the same material, but a plurality of the light-emitting sheets 5 in different color tones or the like may be wound in plural in a laminated state, or a plurality of the multilayer polymer films 6 having different light interference phenomena or the like may be wound in plural in a laminated state. Furthermore, the shape such as the shape of the hook portion 2, the length or the like of the hook body 3, the size such as the length L, the outer diameter d or the like of the light-emitting elements 4 and 23, the shape of the line attachment portion 3a or the like in each of the above-described embodiments are merely examples and can be changed as appropriate within a range not departing from the gist of each invention according to the present invention.

### Industrial Applicability

The present invention is not limited to a fishing hook to be used for fishing in a river or fishing in the sea by individuals but can be used for all the fishing hooks for fishing such as fishing hooks used by fishermen.

### Reference Signs List

- 1: fishing hook
- 2: hook portion
- 2a: point
- 2b: barb
- 2c: bent portion
- 3: hook body
- 3a: line attachment portion
- 4: light-emitting element
- 5: light-emitting sheet
- 6: multilayer polymer film
- 7: fishing line
- 8: adhesive
- 9: uneven surface
- 10: bait
- 11: positioning portion
- 21: fishing hook
- 22: connecting line
- 23: light-emitting element
- 24: affixing line
- 25: lure body
- 26a to 26c: eye
- 27: fishing line
- 28: filamentous body

## Claims

1. A fishing hook comprising:
a hook portion having a sharp point at the tip end and a substantially C-shaped bent portion; and a hook body provided continuously to the hook portion and having a attachment portion to which a fishing line or artificial bait can be attached on a base end side thereof, wherein on the base end side of the hook body, a light-emitting element in which a light-emitting sheet capable of emitting light from a phosphorescent material or
luminescent material and a multilayer polymer film having an interference phenomenon of light are laminated is attached.

2. The fishing hook according to claim 1, wherein
the light-emitting sheet and the multilayer polymer film in the light-emitting element are wound upon the base end side of the hook body in a laminated state; and
the fishing line or an affixing line is wound and affixed upon the surface of the light-emitting element so as to form an uneven surface.

3. The fishing hook according to claim 1, wherein
the attachment portion of the hook body is formed to have a ring shape, and a connecting line capable of being connected to an eye of the artificial bait is attached to the attachment portion.

4. The fishing hook according to any one of claims 1 to 3,
wherein
the light-emitting sheet is formed of a sheet having high visibility from one face side and excellent transparency from the other face side.

5. The fishing hook according to any one of claims 1 to 4,
wherein
a filamentous body made of a plurality of threads is attached to the outside of the light-emitting element.
